(19) Europäisches Patentamt
European Patent Office
Office européen des brevets

(11) **EP 4 057 482 B1**

(12) **EUROPÄISCHE PATENTSCHRIFT**

(45) Veröffentlichungstag und Bekanntmachung des Hinweises auf die Patenterteilung:
**24.09.2025  Patentblatt 2025/39**

(21) Anmeldenummer: **21161840.0**

(22) Anmeldetag: **10.03.2021**

(51) Internationale Patentklassifikation (IPC):
**H02J 13/00** *(2006.01)*    **G06N 3/08** *(2023.01)*

(52) Gemeinsame Patentklassifikation (CPC):
**H02J 13/00001;** G06N 3/08; H02J 2203/10

(54) **VERFAHREN UND VORRICHTUNG ZUR ZUSTANDSSCHÄTZUNG EINES ELEKTRISCHEN NETZES**

METHOD AND DEVICE FOR ESTIMATING THE CONDITION OF AN ELECTRICAL NETWORK

PROCÉDÉ ET DISPOSITIF D'ÉVALUATION DE L'ÉTAT D'UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.09.2022  Patentblatt 2022/37**

(73) Patentinhaber: **Siemens Aktiengesellschaft**
**80333 München (DE)**

(72) Erfinder:
• **Duckheim, Mathias**
**91052 Erlangen (DE)**
• **Werner, Thomas**
**91126 Rednitzhembach (DE)**

(74) Vertreter: **Siemens Patent Attorneys**
**Postfach 22 16 34**
**80506 München (DE)**

(56) Entgegenhaltungen:
**EP-A- 3 107 174        US-A1- 2012 078 436**
**US-A1- 2015 066 402**

• **AHMAD FIAZ ET AL: "Distribution system state estimation-A step towards smart grid", RENEWABLE AND SUSTAINABLE ENERGY REVIEWS, vol. 81, 18 July 2017 (2017-07-18), pages 2659 - 2671, XP085252402, ISSN: 1364-0321, DOI: 10.1016/J.RSER.2017.06.071**
• **CODY RUBEN ET AL: "Hybrid data-driven physics model-based framework for enhance cyber-physical smart grid security", ARXIV.ORG, CORNELL UNIVERSITY LIBRARY, 201 OLIN LIBRARY CORNELL UNIVERSITY ITHACA, NY 14853, 22 October 2019 (2019-10-22), XP081519319**

**Beschreibung**

Die Erfindung betrifft ein Verfahren gemäß dem Oberbegriff des Patentanspruches 1, ein Verfahren gemäß dem Oberbegriff des Patentanspruches 13 sowie eine Vorrichtung gemäß dem Oberbegriff des Patentanspruches 14.

Eine Zustandsschätzung eines elektrischen Netzes (Stromnetz) betrifft eine möglichst vollständige und konsistente Ermittlung des Zustandes des Stromnetzes aus einer Mehrzahl von Messungen. Hierbei ist der Zustand eines Stromnetzes durch die Spannungen und Winkeln an den Netzknoten des Stromnetzes gekennzeichnet.

Messungen weisen grundsätzlich Messabweichungen auf, die insbesondere in Kommunikationsverzögerungen und/oder Konfigurationsfehlern begründet sind. Der im Rahmen einer Zustandsschätzung ermittelte Zustand entspricht somit einem Schätzwert des tatsächlichen realen Zustandes des elektrischen Netzes. Mit anderen Worten wird mittels einer Zustandsschätzung der Zustand ermittelt, welcher im Sinne eines Optimierungsproblems am besten zu den Messungen beziehungsweise den Messwerten passt. Auch wenn lediglich eine Schätzung des tatsächlichen Zustandes erreicht werden kann, so bildet der ermittelte, das heißt der geschätzte Zustand die Grundlage für mehrere übergeordnete Netzanwendungen, beispielsweise für Sicherheitsberichte, Spannungssteuerungen und/oder vorbeugende und korrigierende SCOPF (englisch: Security Constraint Optimal Power Flow).

Der Zustand eines Stromnetzes ist zeitabhängig, sodass eine Zustandsschätzung typischerweise in regelmäßigen Zeitabschnitten erfolgt. Beispielsweise weisen bekannte Überwachungs-, Steuerungs- und Datenerfassungssysteme (englisch: Supervisory Control and Data Acquisition; abgekürzt SCADA) für eine Zustandsschätzung einen Zeitabschnitt von etwa einer Minute auf. Mit anderen Worten besteht die technische Herausforderung darin, dass die Zustandsschätzung in Echtzeit erfolgen muss, damit die übergeordneten Netzanwendungen angewendet und abgeschlossen werden können. Eine weitere technische Herausforderung besteht darin, dass die in Echtzeit durchgeführte Zustandsschätzung ebenfalls eine ausreichende Genauigkeit aufweisen muss.

Das Dokument "Distribution system state estimation - A step towards smart grid", Fiaz Ahmad & al., Renewable and Sustainable Energy Reviews, 81 (2), 2659-2671, beschreibt ein klassisches Verfahren zur Netzzustandsschätzung, welches auf einem Newton Verfahren basiert.

Das Dokument US 2012/078436 A1 offenbart ein Verfahren zur Berechnung von Netzleistungsflüssen.

Der vorliegenden Erfindung liegt die Aufgabe zugrunde, eine verbesserte Zustandsschätzung für ein elektrisches Netz bereitzustellen.

Die Aufgabe wird durch ein Verfahren mit den Merkmalen des unabhängigen Patentanspruches 1, durch ein Verfahren mit den Merkmalen des unabhängigen Patentanspruches 14 sowie durch eine Vorrichtung mit den Merkmalen des unabhängigen Patentanspruches 15 gelöst. In den abhängigen Patentansprüchen sind vorteilhafte Ausgestaltungen und Weiterbildungen der Erfindung angegeben.

Das erfindungsgemäße Verfahren zum Ermitteln eines Zustandes $x$ eines elektrischen Netzes, wobei der Zustand $x$ des elektrischen Netzes durch ermittelte Spannungen und ermittelte Winkel an einem oder mehreren Netzknoten des elektrischen Netzes ausgebildet wird, und bei welchem das Ermitteln des Zustandes $x$ durch eine Recheneinheit erfolgt, mittels welcher basierend auf mehreren mit dem elektrischen Netz assoziierten Messwerten $z$ der Zustand $x$ des elektrischen Netzes durch ein iteratives numerisches Verfahren ausgehend von einem Startwert $x_0$ berechnet wird, ist gekennzeichnet dadurch, dass als Startwert $x_0$ ein mittels eines künstlichen neuronalen Netzes (KI; englisch: Artificial Neural Network, ANN) aus den Messwerten $z$ ermittelter Startzustand $\hat{x}$ verwendet wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird das iterative numerische Verfahren durch die Recheneinheit computergestützt durchgeführt.

Ein numerisches iterative Verfahren (Iteration) ist ein Verfahren, bei welchem durch mehrfachen Wiederholens gleicher oder im Wesentlichen gleicher Schritte eine Annäherung an eine Lösung erreicht wird. Hierzu ist ein Startwert, von welchem das iterative Verfahren ausgeht, erforderlich. Beispielsweise ist ein Newtonverfahren ein gemäß der vorliegenden Erfindung bevorzugtes iteratives Verfahren.

Der Zustand eines elektrischen Netzes beziehungsweise eines Stromnetzes wird bei $n$ Netzknoten durch Spannungen $U_{i=1,\ldots,n}$ sowie Winkel $\delta_{i=1,\ldots,n}$ an den Netzknoten ausgebildet. Die Spannungen und Winkel werden als Zustandsgrößen bezeichnet.

Eine Zustandsschätzung (englisch: State Estimation) ermöglicht eine Bereitstellung eines konsistenten Datensatzes zur Beschreibung des Zustandes eines Stromnetzes. Ein konsistenter Datensatz ist typischerweise nichtredundant und in sich schlüssig und bildet den Zustand des elektrischen Netzes aus. Aus dem ermittelten Zustand können, insbesondere zusammen mit weiteren Netzdaten, weitere abhängige mit dem elektrischen Netz assoziierte Größen ermittelt werden. Die Knotenspannungen mit ihrem Betrag und Winkel bilden einen solchen Zustand aus. Mit andere Worten wird der Zustand eines elektrischen Netzes beziehungsweise eines Stromnetzes bei $n$ Netzknoten durch Knotenspannungen beziehungsweise Spannungen $U_{i=1,\ldots,n}$ sowie Winkel $\delta_{i=1,\ldots,n}$ an den Netzknoten ausgebildet. Insbesondere aufgrund von Messfehlern und unzureichender Erfassung von Zustandsgrößen kann lediglich eine Schätzung des tatsächlichen Zustandes des elektrischen Netzes erreicht werden.

In diesem Sinne bildet das erfindungsgemäße Verfahren zum Ermitteln des Zustandes $x$ des elektrischen Netzes eine Zustandsschätzung für das elektrische Netz aus.

Gemäß der vorliegenden Erfindung wird der Zustand des elektrischen Netzes aus Messwerten ermittelt. Die zu den Messwerten zugehörigen Messgrößen werden insbesondere derart festgelegt, dass diese leicht zugänglich und erfassbar sind. Dies ist beispielsweise für Wirk- und Blindleistungsflüsse, Abnahme- und Einspeiseleistungen und Spannungen der Fall. Die Messgrößen sind typischerweise untereinander abhängig und redundant, das heißt es werden mehr Messwerte als Zustandsgrößen verwendet. Bevorzugt werden wenigstens doppelt so viele Messwerte wie Zustandsgrößen bereitgestellt und verwendet.

Das Ermitteln des Zustandes, der einem Schätzwert für den tatsächlichen Zustand des elektrischen Netzes entspricht, erfolgt mittels eines numerischen iterativen Verfahrens. Dies kann als klassische Zustandsschätzung bezeichnet werden. Für ein solches iterative Verfahren ist ein Startwert, bei welchem das iterative Verfahren beginnt, erforderlich. Mit anderen Worten ist ein Startzustand erforderlich.

Erfindungsgemäß wird als Startwert (englisch: seed) der mittels dem künstlichen neuronalen Netz aus den Messwerten ermittelte Startzustand verwendet. Hierbei ist das künstliche neuronale Netz derart ausgebildet und trainiert, dass dieses als Eingang die Messwerte verarbeiten und in einen Zustand gemäß der Zustandsgrößen wandeln kann. Ein solches künstliches neuronales Netz kann mittels bekannter Daten (Eingang: Messwerte; Ausgang: Zustand) und bekannter Trainingsverfahren bereitgestellt werden.

Gemäß der vorliegenden Erfindung wird somit der Startwert für das klassische iterative Verfahren durch ein entsprechend trainiertes künstliches neuronales Netz bereitgestellt. Durch das künstliche neuronale Netz wird eine erste schnelle Schätzung für den Zustand des elektrischen Netzes bereitgestellt (Startzustand). Der derart ermittelte Startzustand wird als Startwert verwendet, sodass dadurch eine deutlich schnellere Konvergenz des iterativen Verfahrens erreicht wird. Das ist deshalb der Fall, da zu erwarten ist, dass der mittels des künstlichen Netzes ermittelte Startzustand deutlich näher am Konvergenzpunkt des klassischen Schätzers (iteratives Verfahren) liegt. Insbesondere wird die Anzahl der Iterationen, das heißt die Anzahl der Iterationsschritte, bis zur festgelegten Genauigkeit verringert. Dadurch wird die zeitliche Reduktion des klassischen Schätzverfahrens (iteratives Verfahren) ohne Einbußen in der Genauigkeit ermöglicht.

Weiterhin ist die Genauigkeit des Startzustandes, der mittels des neuronalen Netzes ermittelt wurde, unbekannt und ist zudem von der Güte und dem Umfang des Trainings des künstlichen neuronalen Netzes abhängig. Somit kann der Startzustand nicht unmittelbar als Zustandsschätzung herangezogen werden. Die vorliegende Erfindung überwindet diesen Nachteil des künstlichen neuronalen Netzes, indem der ermittelte Startzustand lediglich als Startwert für eine klassische Zustandsschätzung herangezogen wird.

Die vorliegende Erfindung ermöglicht somit eine schnellere und/oder genauere Zustandsschätzung.

Das erfindungsgemäße Verfahren zur Steuerung eines elektrischen Netzes, wobei die Steuerung basierend auf einen ermittelten Zustand $x$ des elektrischen Netzes, der durch ermittelte Spannungen und ermittelte Winkel an einem oder mehreren Netzknoten des elektrischen Netzes ausgebildet wird, erfolgt, ist gekennzeichnet dadurch, dass der Zustand x mittels eines Verfahrens gemäß einem der Ansprüche 1 bis 12 ermittelt wird.

Es ergeben sich zum erfindungsgemäßen Verfahren zum Ermitteln des Zustandes gleichartige und gleichwertige Vorteile und Ausgestaltungen des erfindungsgemäßen Verfahrens zur Steuerung des elektrischen Netzes.

Die erfindungsgemäße Vorrichtung zum Ermitteln eines Zustandes $x$ eines elektrischen Netzes (Zustandsschätzer), umfassend eine Recheneinheit, wobei der Zustand $x$ des elektrischen Netzes durch Spannungen und Winkel an einem oder mehreren Netzknoten des elektrischen Netzes ausgebildet wird, und die Recheneinheit derart ausgebildet ist, den Zustand $x$ des elektrischen Netzes basierend auf mehreren mit dem elektrischen Netz assoziierten Messwerten $z$ durch ein iteratives numerisches Verfahren ausgehend von einem Startwert $x_0$ zu berechnen, ist dadurch gekennzeichnet, dass die Recheneinheit derart ausgebildet ist, als Startwert $x_0$ ein mittels eines künstlichen neuronalen Netzes aus den Messwerten $z$ ermittelten Startzustand $\hat{x}$ zu verwenden.

Es ergeben sich zum erfindungsgemäßen Verfahren zum Ermitteln des Zustandes gleichartige und gleichwertige Vorteile und Ausgestaltungen der erfindungsgemäßen Vorrichtung.

Gemäß einer vorteilhaften Ausgestaltung der Erfindung wird als iteratives numerisches Verfahren ein Newtonverfahren verwendet.

Vorteilhafterweise wird besonders bei einem bereits guten Startwert, der vorliegend durch das künstliche neuronale Netz bereitgestellt wird, eine schnelle quadratische Konvergenz erreicht. Mit anderen Worten stellt der erfindungsgemäß mittels des künstlichen neuronalen Netzes ermittelte Startwert die Konvergenz und zudem die schnelle Konvergenz des Newtonverfahrens sicher, sodass das Newtonverfahren und das Ermitteln des Startwertes durch das künstliche neuronale Netz synergetisch zusammenwirken.

In einer vorteilhaften Ausgestaltung der Weiterbildung der Erfindung bilden die Messwerte einen Messvektor $z$ aus, der mit den Netzknoten und/oder mit Leitungen des elektrischen Netzes assoziierte und erfasste Spannungen, Ströme, Wirkleistungen und/oder Blindleistungen umfasst.

Vorteilhafterweise sind die genannten Messgrößen für ein Stromnetz leicht zugänglich und sind somit zum Ermitteln des Zustandes besonders gut geeignet. Die Ausbildung eines Messvektors der Form $z = (P_{ij}, Q_{ij}, P_i, Q_i, U_i, I_i)^T$ ist weiterhin numerisch vorteilhaft, wobei $P_{ij}$ die erfassten Wirkleistungsflüsse vom Netzknoten $i$ zum Netzknoten $j$, $Q_{ij}$ die erfassten Blindleistungsflüsse vom Netzknoten $i$ zum Netzknoten $j$, $P_i$ die Wirkleistung am Netzknoten $i$, $Q_i$ die Blindleistung am Netzknoten $i$, $U_i$ die Spannung am Netzknoten $i$ sowie $I_i$ die Ströme am Netzknoten $i$ bezeichnet. Die genannten Größen sind vorzeichenbehaftet und können ebenfalls als Vektor ausgebildet sein. Mathematisch äquivalente Ausbildungen des Messvektors, beispielsweise durch Multiplikation mit einem Skalar, durch Transponieren und/oder durch Permutation seiner Elemente, können entsprechend vorgesehen sein. Ebenso ist ein Weglassen von Messgrößen sowie ein Hinzunehmen weiterer Messgrößen möglich.

Gemäß einer bevorzugten Ausgestaltung der Erfindung wird der Zustand durch einen Zustandsvektor $x$, der die Spannungen und Winkel an den jeweiligen Netzknoten des elektrischen Netzes umfasst, gebildet.

Beispielsweise wird der Zustandsvektor durch $x = (U_i, \delta_i)^T = (U_1, ... , U_n, \delta_1, ... , \delta_n)^T$ ausgebildet.

In einer vorteilhaften Weiterbildung der Erfindung werden die Messwerte $z$ durch ein Steuerungssystem des elektrischen Netzes bereitgestellt.

Vorteilhafterweise können dadurch der Zustandsschätzung vorteilhafte und aktuelle Messwerte zugrunde gelegt werden. Insbesondere wird ein solches Steuerungssystem durch ein Überwachungs-, Steuerungs- und Datenerfassungs-System, das heißt durch an SCADA-System ausgebildet (englisch: Supervisory Control and Data Acquisition, SCADA).

Erfindungsgemäß wird eine Zielfunktion $J(x)$ durch das iterative numerische Verfahren minimiert.

Gemäß einer vorteilhaften Ausgestaltung der Erfindung umfasst die Zielfunktion $J(x)$ eine gewichtete quadratische Abweichung zwischen den Messwerten $z$ und einer vom zu ermittelnden Zustand $x$ abhängigen Messmodellfunktion $h(x)$.

Mit anderen Worten wird eine bezüglich der Messmodellfunktion eine gewichtete Methode der kleinsten Quadrate (englisch: weighted Mean Squared Error, weighted MSE) für die klassische Zustandsschätzung, die mittels des iterativen Verfahrens basierend auf den erfindungsgemäßen Startwert erfolgt, verwendet. Hierbei wird das Messmodell $z = h(x) + e$ beziehungsweise $z_i = h_i(x_1, ... , x_n) + e_i$ für $i = 1, ... , m$ mit $m > n$ Messwerten verwendet, wobei $e$ beziehungsweise die $e_i$ Fehler des Messmodells kennzeichnen. Der Zustand wird basierend auf diesem Messmodell durch eine Minimierung des Fehlers, das heißt durch eine Minimierung der Zielfunktion $J(x) = \sum_{i=1}^{m} w_i (z_i - h_i(x))^2$ ermittelt. Hierbei sind $w_i$ die Gewichte, die bevorzugt als $w_i = R_{ii}$ festgelegt werden, wobei $R$ die Kovarianzmatrix der Messwerte bezeichnet. Durch die genannte Minimierung wird der Zustand $x$ vorteilhafterweise derart bestimmt, dass dessen Fehler bezüglich der vorliegenden beziehungsweise erfassten Messwerte und bezüglich der Messmodellfunktion möglichst klein ist. Die Messmodellfunktion ist typischerweise nichtlinear. Eine lineare Messmodellfunktion, beispielsweise in Form einer Matrix, kann jedoch vorgesehen sein. Die Messmodellfunktion ist das Modell, welcher der klassischen Zustandsschätzung zugrunde liegt. Sie gibt an, wie die erfassten Messwerte beziehungsweise Messgrößen aus dem Zustand abgeleitet sind, beispielsweise wie die Wirkleistung einer Leitung von den Spannungen und Winkeln der zugehörigen Netzknoten abhängig ist. Grundsätzlich wird eine Messmodellfunktion bereitgestellt. Erfindungsgemäß wird der mittels des künstlichen neuronalen Netzes ermittelte Startzustand $\hat{x}$ als Startwert $x_0$ verwendet, wenn dessen Zielfunktionswert $J(\hat{x})$ größer oder gleich einem Schwellenwert $J_c$ ist.

Mit anderen Worten wird der ermittelte Startzustand nur dann als Startwert für die klassische Zustandsschätzung verwendet, wenn dieser bezüglich der Zielfunktion nicht hinreichend genau ist, das heißt wenn dessen Zielfunktionswert $J(\hat{x})$ größer oder gleich dem Schwellenwert $J_c$ ist. Dadurch erfolgt vorteilhafterweise eine Prüfung auf die Genauigkeit beziehungsweise der Abweichung des mittels des künstlichen neuronalen Netzes ermittelten Startzustandes. Ist der durch die KI ermittele Startzustand bereits hinreichend genau, das heißt ist $J(\hat{x}) < J_c$, so könnte dieser bereits als Zustandsschätzung verwendet werden. Ist hingegen der Startzustand bezüglich des $J$-Maßes nicht hinreichend genau, das heißt $J(\hat{x}) \geq J_c$, so wird eine klassische Zustandsschätzung mit $x_0 = \hat{x}$ durchgeführt. Mit anderen Worten erfolgt eine nachträgliche Validierung (englisch: Post Validation) des durch die KI ermittelten Startzustandes gemäß eines Test bezüglich seines $J$-Residuals beziehungsweise $J$-Rests (englisch: Largest Residual Test). Insgesamt kann dadurch die Rechenzeit für das Ermitteln des Zustandes reduziert werden.

Gemäß einer vorteilhaften Ausgestaltung der Erfindung wird der mittels des künstlichen neuronalen Netzes ermittelte Zustand $\hat{x}$ als Startwert $x_0$ nicht verwendet, wenn der ermittelte Zustand $\hat{x}$ einen Chi-Quadrat-Test mit einer festgelegten Wahrscheinlichkeitsschwelle nicht besteht.

In diesem Fall wird der klassische Zustandsschätzer angewendet und dessen Ergebnis als finales Schätzergebnis, das heißt als finaler Zustand, ausgegeben. Hierbei wird ein festgelegter Standardstartwert als Startwert verwendet. Mit anderen Worten wird der durch die KI ermittelte Startwert verworfen.

Mit anderen Worten erfolgt vorteilhafterweise ein Chi-Quadrat-Test des durch die KI ermittelten Zustands (Schätzzustand). Nur wenn der durch die KI ermittelte Zustand den Chi-Quadrat-Test nicht besteht, kann dieser als Startwert für die klassische Zustandsschätzung herangezogen oder die klassische Zustandsschätzung gemäß ihres Standardstartwertes durchgeführt werden. Hierbei kann in dem Fall des Nichtbestehens des Chi-Quadrat-Tests einen klassische Zustandsschätzung mit einem besseren als durch die KI ermittelten Startwert, beispielsweise einem festgelegten Standardstartwert, durchgeführt werden. Dadurch kann weitere Rechenzeit eingespart werden.

Besteht der Startzustand bereits den Chi-Quadrat-Test, so kann dieser direkt als Zustandsschätzung herangezogen werden, das heißt, dass in diesem Fall der Zustand bereits durch den Startzustand ermittelt ist. Der Chi-Quadrat-Test ermittelt hierbei, ob der Startwert bezüglich der festgelegten Wahrscheinlichkeitsschwelle wahrscheinlich ist, das heißt ob dieser wahrscheinlicher als die festgelegte Wahrscheinlichkeitsschwelle ist. Durch das Festlegen der Wahrscheinlichkeitsschwelle kann somit ein Kompromiss zwischen Rechenzeit und erforderlicher Genauigkeit erreicht werden.

Mit anderen Worten wird mittels des Chi-Quadrattest ermittelt, ob ein Zustand wahrscheinlich ist, das heißt wahrscheinlicher als die festgelegte Wahrscheinlichkeitsschwelle. Weitere gleichartige Tests sind vorgesehen, beispielsweise ein normierter maximal residual Test.

Eine weitere Ausgestaltung des Verfahrens ist es, die klassische (langsame) Zustandsschätzung nur dann auszuführen und zu verwenden, wenn für ein Schätzergebnis des KI-basierten Zustandsschätzers, das heißt für den durch das künstliche neuronale Netz ermittelten Zustand, eine zu geringe Wahrscheinlichkeit im Chi-Quadrattest ermittelt worden ist. Diese Verfahren profitiert von der Schnelligkeit des KI-basierten Zustandsschätzers und überwindet den Nachteil variabler Güte des künstlichen neuronalen Netzes durch die bedingte Verwendung des klassischen Zustandsschätzers.

Hierbei ist es bevorzugt, wenn als Wahrscheinlichkeitsschwelle ein Wert zwischen 95 Prozent und 100 Prozent, insbesondere zwischen 99 Prozent und 100 Prozent, verwendet wird.

Dadurch wird vorteilhafterweise sichergestellt, dass für durch die ermittelte KI bereits wahrscheinlichen Zustände keine weitere klassische Zustandsschätzung erforderlich ist. Dadurch kann vorteilhafterweise Rechenzeit für das Ermitteln des Zustandes reduziert werden.

In einer vorteilhaften Ausgestaltung der Erfindung wird das künstliche neuronale Netz (KI) derart trainiert und ausgebildet, Zustände des elektrischen Netzes aus mit dem elektrischen Netz assoziierten Messwerten zu ermitteln.

Bevorzugt erfolgt hierbei das Training der KI mittels eines Trainingsdatensatzes, wobei der Trainingsdatensatz mit dem elektrischen Netz assoziierte Messwerte und zu den Messwerten zugehörige Zustände des elektrischen Netzes umfasst.

Vorteilhafterweise ist dadurch sichergestellt, dass die KI basierend auf den Messwerten grundsätzlich einen Zustand im Sinne einer klassischen Zustandsschätzung, der dann als Startwert der klassischen Zustandsschätzung herangezogen werden kann, ermitteln kann.

Hierbei ist es vorteilhaft, wenn der Trainingsdatensatz durch eine oder mehrere Simulationen und/oder historische Messwerte und zugehörige historische Zustände des elektrischen Netzes gebildet wird.

Dadurch ist die KI ausreichend gut trainiert, sodass der ermittelte Startzustand dem zu ermittelnden Zustand bereits nahekommt. Dadurch wird eine schnelle Konvergenz der klassischen Zustandsschätzung ermöglicht, sodass die Rechenzeit reduziert und/oder eine verbesserte Genauigkeit erreicht werden kann.

Gemäß einer bevorzugten Ausgestaltung der Erfindung wird das Verfahren gemäß der vorliegenden Erfindung und/oder einer ihrer Ausgestaltungen gemäß festgelegten Zeitschritten wiederholend durchgeführt.

Dadurch wird vorteilhafterweise ein Ermitteln des Zustandes des elektrischen Netzes in Echtzeit ermöglicht. Mit anderen Worten erfolgt eine Echtzeitzustandsschätzung. Dies wird besonders vorteilhaft durch die erfindungsgemäße Verwendung des durch die KI ermittelten Startzustandes ermöglicht, da dadurch die Rechenzeit der Zustandsschätzung insgesamt deutlich reduziert werden kann.

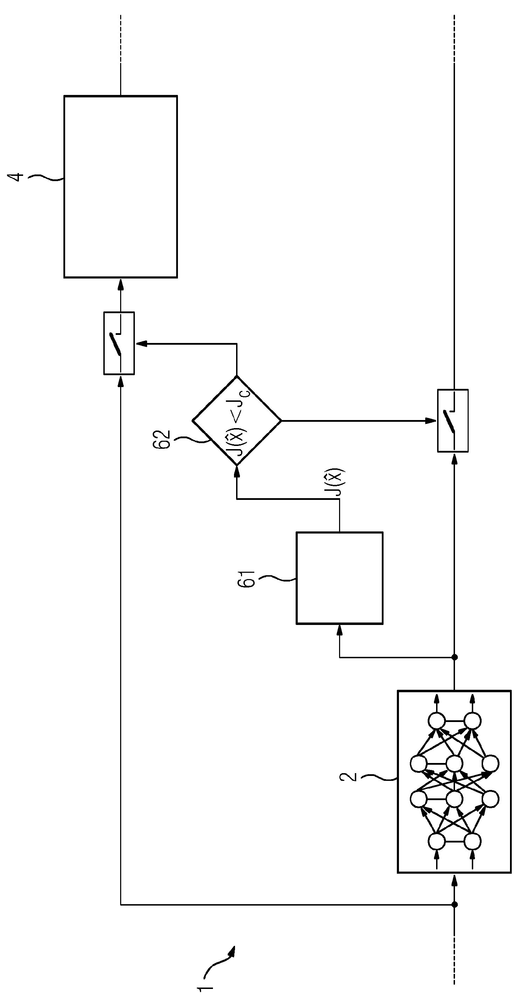

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur schematisiert ein Ablaufdiagramm einer Zustandsschätzung gemäß einer Ausgestaltung der vorliegenden Erfindung.

Gleichartige, gleichwertige oder gleichwirkende Elemente können in der Figur mit denselben Bezugszeichen versehen sein.

Die Figur zeigt eine Zustandsschätzung gemäß einer Ausgestaltung der vorliegenden Erfindung, bei welcher ein Zustand 42 eines elektrischen Netzes ermittelt wird.

Im Rahmen einer Zustandsschätzungen, wie in der Figur dargestellt, werden Spannungen und Winkel eines elektrischen Netzes (Stromnetz) an seinen Netzknoten bestmöglich ermittelt, das heißt geschätzt. In diesem Sinne ist das Ermitteln des Zustandes des Stromnetzes gemäß der vorliegenden Ausgestaltung zu verstehen. Es wird somit nicht der tatsächliche Zustand des Stromnetzes ermittelt, was praktisch unmöglich ist, sondern es wird ein Zustand 42 ermittelt, der bezüglich erfasster Messwerte dem tatsächlichen Zustand des Stromnetzes möglichst nahekommt, das heißt bezüglicher der Messwerte den geringsten Fehler aufweist.

Die Zustandsschätzung (Ermitteln eines Zustandes 42 des elektrischen Netzes) basiert auf Messwerte 1 von Messgrößen. Die Messwerte eines Stromnetzes werden typischerweise durch ein SCADA-System erfasst und/oder durch dieses zentralisiert gesammelt und für die Zustandsschätzung beziehungsweise einem Zustandsschätzer (Vorrichtung zum Ermitteln eines Zustandes 42 des Stromnetzes) bereitgestellt. Bevorzugt sind die Messgrößen leitungsscharfe Wirkleistungsflüsse und/oder Blindleistungsflüsse und/oder netzknotenscharfe Wirkleistungen, Blindleistungen, Spannungen und/oder Stromstärken (Ströme). Die Messwerte 1 zu einem Messvektor zusammengefasst werden.

Die bereitgestellten Messwerte 1 werden einem künstlichen neuronalen Netz 2 (KI oder ANN) als Eingang zugeführt. Die KI 2 ist entsprechend trainiert und ausgebildet aus den zugeführten Messwerten 1 einen Zustand des Stromnetzes zu ermitteln, das heißt eine KI-basierte Zustandsschätzung durchzuführen. Es erfolgt somit eine erste Zustandsschätzung mittels der KI 2, die im Vergleich zu einer klassischen Zustandsschätzung zeitlich schneller ist.

Ein Nachteil der KI-basierten Zustandsschätzung 2 ist, dass nicht sichergestellt ist, ob der durch die KI 2 ermittelte Zustand wahrscheinlich beziehungsweise realistisch ist. Insbesondere liefert die KI 2 für bezüglich ihres Trainingsdatensatzes außergewöhnliche Zustände typischerweise ein nicht hinreichend genaues Ergebnis.

Der genannte Nachteil der KI 2 wird vorliegend durch eine zweite Zustandsschätzung 4 überwunden. Die zweite Zustandsschätzung 4 erfolgt basierend auf einer Modellmessfunktion $h(x)$ des Stromnetzes mittels eines iterativen numerischen Verfahrens. Die zweite Zustandsschätzung 4 bildet somit eine klassische Zustandsschätzung aus.

Für die klassische Zustandsschätzung 4 ist für das iterative Verfahren ein Startwert, das heißt ein Startzustand, erforderlich.

Vorliegend wird als Startzustand beziehungsweise als Startwert der durch die KI 2 ermittelte Zustand verwendet. Dadurch startet die Iteration bereits bei einem verbesserten Startwert, sodass eine bessere Konvergenz und somit eine zeitlich schnellere klassische Zustandsschätzung 4 ermöglicht wird. Dies ist insbesondere bei Verwendung eines Newtonverfahrens, wie im Kasten der Zustandsschätzung 4 angedeutet, vorteilhaft.

Weiterhin ist es vorteilhaft, wenn ein der KI 2 nachgelagerter oder der klassischen Zustandsschätzung 4 vorgelagerter Test des durch die KI 2 ermittelten Zustandes erfolgt. Hierbei wird ermittelt, ob der durch die KI 2 ermittelte Zustand bereits hinreichend genau ist und somit eine zweite klassische Zustandsschätzung 4 gegebenenfalls nicht erforderlich ist.

Mit anderen Worten wird lediglich dann eine klassische Zustandsschätzung 4 basierend auf den durch die KI 2 ermittelten Startwert durchgeführt, wenn dieser den genannten Test nicht besteht (Post Validation). Hierbei können verschiedene Testverfahren herangezogen werden, beispielsweise ein Chi-Quadrat-Test oder ein sogenannter $h(x)$-Test, der auf der Modellmessfunktion $h(x)$ basiert. Im Rahmen des $h(x)$-Test wird die gegebenenfalls gewichtete quadratische Gesamtabweichung der Messwerte von der vom zu testenden Zustand abhängigen Messmodellfunktion ermittelt (durch das Bezugszeichen 61 gekennzeichnet).

Mit anderen Worten wird $$J(x) = \sum_{i=1}^{m} w_i(z_i - h_i(x))^2$$ bestimmt, wobei $x$ gleich dem durch die KI 2 ermittelten Zustand $\hat{x}$ ist. Ist $J(\hat{x})$ kleiner als ein festgelegter Schwellenwert $J_c$, das heißt ist $J(\hat{x}) < J_c$, so ist keine zweite klassische Zustandsschätzung 4 erforderlich. Mit anderen Worten wird die klassische Zustandsschätzung 4 dann durchgeführt, wenn $J(\hat{x}) \geq J_c$ ist. Ist $J(\hat{x}) < J_c$, so wird der zu ermittelnde Zustand $x$ 42 bereits durch den mit der KI 2 ermittelten Zustand $\hat{x}$ festgelegt, das heißt es wird $x = \hat{x}$ gesetzt. Die Bedingung $J(\hat{x}) < J_c$ beziehungsweise $J(\hat{x}) \geq J_c$ ist durch das Bezugszeichen 62 in der Figur gekennzeichnet.

Wird eine klassische Zustandsschätzung 4 durchgeführt, das heißt ist $J(\hat{x}) \geq J_c$, so basiert diese auf der Minimierung von $J(x)$. Durch die Minimierung wird der Zustand $x$ 42 ermittelt wird. Dies erfolgt insbesondere mittels eines Newtonverfahrens. Ist $J(x) = [z - h(x)]^T R[z - h(x)]$, wobei R die Kovarianzmatrix der Messwerte ist, so kann der Zustand $x$ 42, der $J(x)$ minimiert, durch $g(x) = \nabla_x J(x) = 0$ ermittelt werden. Iterativ und somit näherungsweise kann die Nullstelle von $g(x)$, die dem zu ermittelnden Zustand x 42 entspricht bevorzugt durch $x^{k+1} = x^k - \lambda[G(x^k)]^{-1} g(x^k)$ bestimmt werden. Hierbei ist $G$ die Jacobi-Matrix von $J$, $x^k$ die Lösung im Iterationsschritt $k$ und $\lambda$ eine Dämpfungskonstante. Bevorzugt ist $\lambda = 1$. Durch die Iteration wird der Zustand $x$ 42 ermittelt. Hierbei ist $x^{k=0} = x_0 = \hat{x}$, das heißt als Startwert der Iteration wird der durch die KI 2 bestimmte Zustand verwendet. Die Iteration startet demnach bei dem durch die KI 2 ermittelten Zustand $\hat{x}$ und endet nach einem festgelegten Abbruchkriterium, beispielsweise wenn $J(x) < J_c$ ist, beim zu ermittelnden Zustand $x$ 42. Es kann ebenfalls ein zur Bedingung 62 verschiedenes Abbruchkriterium vorgesehen sein.

Durch die auf den Startwert $\hat{x}$ basierte klassische Zustandsschätzung wird somit der Zustand 42 ermittelt. Durch den vorgesehenen Startwert, der durch die KI 2 ermittelt wird, erfolgt die klassische Zustandsschätzung 4 wesentlich schneller, sodass die Rechenzeit reduziert oder die Genauigkeit der Zustandsschätzung insgesamt erhöht werden kann.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

**Patentansprüche**

1. Verfahren zum Ermitteln eines Zustandes $x$ (42) eines elektrischen Netzes, wobei der Zustand $x$ (42) des elektrischen Netzes durch ermittelte Spannungen und ermittelte Winkel an einem oder mehreren Netzknoten des elektrischen Netzes ausgebildet wird, wobei das Ermitteln des Zustandes $x$ (42) durch eine Recheneinheit erfolgt, mittels welcher basierend auf mehreren mit dem elektrischen Netz assoziierten Messwerten $z$ (1) der Zustand $x$ (42) des elektrischen Netzes durch ein iteratives numerisches Verfahren (4) ausgehend von einem Startwert $x_0$ berechnet wird, und eine Zielfunktion $J(x)$ durch das iterative numerische Verfahren (4) minimiert wird, wobei als Startwert $x_0$ ein mittels eines künstlichen neuronalen Netzes (2) aus den Messwerten $z$ (1) ermittelter Startzustand $\hat{x}$ verwendet wird, **gekennzeichnet dadurch, dass** der mittels des künstlichen neuronalen Netzes (2) ermittelte Startzustand $\hat{x}$ als Startwert $x_0$ verwendet wird, wenn dessen Zielfunktionswert $J(\hat{x})$ größer oder gleich einem Schwellenwert $J_c$ ist.

2. Verfahren gemäß Anspruch 1, **gekennzeichnet dadurch, dass** als iteratives numerisches Verfahren (4) ein Newtonverfahren verwendet wird.

3. Verfahren gemäß Anspruch 1 oder 2, **gekennzeichnet dadurch, dass** die Messwerte (1) einen Messvektor $z$ ausbilden, der mit den Netzknoten und/oder mit Leitungen des elektrischen Netzes assoziierte und erfasste Spannungen, Ströme, Wirkleistungen und/oder Blindleistungen umfasst.

4. Verfahren gemäß einem der vorhergehenden Ansprüche, **gekennzeichnet dadurch, dass** der Zustand (42) durch einen Zustandsvektor $x$, der die Spannungen und Winkel an den jeweiligen Netzknoten des elektrischen Netzes umfasst, gebildet wird.

5. Verfahren gemäß einem der vorhergehenden Ansprüche, **gekennzeichnet dadurch, dass** die Messwerte $z$ (1) durch ein Steuerungssystem des elektrischen Netzes bereitgestellt werden.

6. Verfahren gemäß einem der vorhergehenden Ansprüche, **gekennzeichnet dadurch, dass** die Zielfunktion $J(x)$ eine gewichtete quadratische Abweichung zwischen den Messwerten $z$ (1) und einer vom zu ermitteInden Zustand $x$ (42) abhängigen Messmodellfunktion $h(x)$ umfasst.

7. Verfahren gemäß einem der vorhergehenden Ansprüche, **gekennzeichnet dadurch, dass** der mittels des künstlichen neuronalen Netzes (2) ermittelte Zustand $\hat{x}$ als Startwert $x_0$ nicht verwendet wird, wenn der Zustand $\hat{x}$ einen Chi-Quadrat-Test mit einer festgelegten Wahrscheinlichkeitsschwelle nicht besteht.

8. Verfahren gemäß Anspruch 7, **gekennzeichnet dadurch, dass** als Wahrscheinlichkeitsschwelle ein Wert zwischen 95 Prozent und 100 Prozent, insbesondere zwischen 99 Prozent und 100 Prozent, verwendet wird.

9. Verfahren gemäß einem der vorhergehenden Ansprüche, **gekennzeichnet dadurch, dass** das künstliche neuronale Netz (2) derart trainiert und ausgebildet ist, Zustände des elektrischen Netzes aus mit dem elektrischen Netz assoziierten Messwerten zu ermitteln.

10. Verfahren gemäß einem der vorhergehenden Ansprüche, **gekennzeichnet dadurch, dass** das künstliche neuronale Netz (2) mittels eines Trainingsdatensatzes trainiert wurde, wobei der Trainingsdatensatz mit dem elektrischen Netz assoziierte Messwerte und zu den Messwerten zugehörige Zustände des elektrischen Netzes umfasst.

11. Verfahren gemäß Anspruch 10, **gekennzeichnet dadurch, dass** der Trainingsdatensatz durch eine oder mehrere Simulationen und/oder historische Messwerte und zugehörige historische Zustände des elektrischen Netzes gebildet wird.

12. Verfahren gemäß einem der vorhergehenden Ansprüche, **gekennzeichnet dadurch, dass** dieses gemäß festgelegten Zeitschritten wiederholend durchgeführt wird.

13. Verfahren zur Steuerung eines elektrischen Netzes, wobei die Steuerung basierend auf einen ermittelten Zustand $x$ (42) des elektrischen Netzes, der durch ermittelte Spannungen und ermittelte Winkel an einem oder mehreren Netzknoten des elektrischen Netzes ausgebildet wird, erfolgt, **gekennzeichnet dadurch, dass** der Zustand $x$ (42) mittels eines Verfahrens gemäß einem der Ansprüche 1 bis 12 ermittelt wird.

14. Vorrichtung zum Ermitteln eines Zustandes $x$ (42) eines elektrischen Netzes, umfassend eine Recheneinheit, wobei der Zustand $x$ (42) des elektrischen Netzes durch Spannungen und Winkel an einem oder mehreren Netzknoten des elektrischen Netzes ausgebildet wird, und die Recheneinheit derart ausgebildet ist, den Zustand $x$ (42) des elektrischen Netzes basierend auf mehreren mit dem elektrischen Netz assoziierten Messwerten $z$ (1) durch ein iteratives numerisches Verfahren (4) ausgehend von einem Startwert $x_0$ zu berechnen, und eine Zielfunktion $J(x)$ durch das iterative numerische Verfahren (4) zu minimieren, wobei die Recheneinheit derart ausgebildet ist, als Startwert $x_0$ ein mittels eines künstlichen neuronalen Netzes (2) aus den Messwerten $z$ (1) ermittelten Startzustand $\hat{x}$ zu verwenden, **dadurch gekennzeichnet, dass** der mittels des künstlichen neuronalen Netzes (2) ermittelten

Startzustand $\hat{x}$ als Startwert $x_0$ verwendet wird, wenn dessen Zielfunktionswert $J(\hat{x})$ größer oder gleich einem Schwellenwert $J_c$ ist.

## Claims

1. Method for ascertaining a state $\mathbf{x}$ (42) of an electrical grid, wherein the state $\mathbf{x}$ (42) of the electrical grid is formed by ascertained voltages and ascertained angles at one or more grid nodes of the electrical grid, wherein the ascertainment of the state $\mathbf{x}$ (42) is performed by a computing unit, by means of which, on the basis of a plurality of measured values $\mathbf{z}$ (1) associated with the electrical grid, the state $\mathbf{x}$ (42) of the electrical grid is calculated by an iterative numerical method (4) beginning from an initial value $\mathbf{x}_0$, and a target function $\mathbf{J(x)}$ is minimized by the iterative numerical method (4), wherein an initial state $\hat{x}$ ascertained from the measured values $\mathbf{z}$ (1) by means of an artificial neural network (2) is used as the initial value $\mathbf{x}_0$, **characterized in that** the initial state $\hat{x}$ ascertained by means of the artificial neural network (2) is used as the initial value $\mathbf{x}_0$ if its target function value $J(\hat{x})$ is greater than or equal to a threshold value $\mathbf{J_c}$.

2. Method according to Claim 1, **characterized in that** Newton's method is used as the iterative numerical method (4).

3. Method according to Claim 1 or 2, **characterized in that** the measured values (1) constitute a measurement vector $\mathbf{z}$ comprising voltages, currents, active powers and/or reactive powers associated with and acquired by the grid nodes and/or lines of the electrical grid.

4. Method according to one of the preceding claims, **characterized in that** the state (42) is formed by a state vector $\mathbf{x}$ that comprises the voltages and angles at the respective grid nodes of the electrical grid.

5. Method according to one of the preceding claims, **characterized in that** the measured values $\mathbf{z}$ (1) are provided by a control system of the electrical grid.

6. Method according to one of the preceding claims, **characterized in that** the target function $\mathbf{J(x)}$ comprises a weighted quadratic deviation between the measured values $\mathbf{z}$ (1) and a measurement model function $\mathbf{h(x)}$ that depends on the state $\mathbf{x}$ (42) to be ascertained.

7. Method according to one of the preceding claims, **characterized in that** the state $\hat{x}$ ascertained by means of the artificial neural network (2) is not used as the initial value $\mathbf{x}_0$ if the state $\hat{x}$ fails a chi-squared test with a specified probability threshold.

8. Method according to Claim 7, **characterized in that** a value between 95 percent and 100 percent, in particular between 99 percent and 100 percent, is used as the probability threshold.

9. Method according to one of the preceding claims, **characterized in that** the artificial neural network (2) is trained and designed in such a way as to ascertain states of the electrical grid from measured values associated with the electrical grid.

10. Method according to one of the preceding claims, **characterized in that** the artificial neural network (2) was trained by means of a training data set, wherein the training data set comprises measured values associated with the electrical grid and states of the electrical grid belonging to the measured values.

11. Method according to Claim 10, **characterized in that** the training data set is formed by one or more simulations and/or historic measured values and associated historic states of the electrical grid.

12. Method according to one of the preceding claims, **characterized in that** it is carried out repeatedly in accordance with specified time intervals.

13. Method for the control of an electrical grid, wherein the control takes place on the basis of an ascertained state $\mathbf{x}$ (42) of the electrical grid which is formed by ascertained voltages and ascertained angles at one or more grid nodes of the electrical grid, **characterized in that** the state $\mathbf{x}$ (42) is ascertained by means of a method according to one of Claims 1 to 12.

14. Apparatus for ascertaining a state $\mathbf{x}$ (42) of an electrical grid, comprising a computing unit, wherein the state $\mathbf{x}$ (42) of the electrical grid is formed by voltages and angles at one or more grid nodes of the electrical grid, and the computing unit is designed so as to calculate the state $\mathbf{x}$ (42) of the electrical grid on the basis of a plurality of measured values $\mathbf{z}$ (1) associated with the electrical grid by an iterative numerical method (4) starting from an initial value $\mathbf{x}_0$, and to minimize a target function $\mathbf{J(x)}$ by the iterative numerical method (4), wherein the computing unit is designed so as to use an initial state $\hat{x}$ ascertained from the measured values $\mathbf{z}$ (1) by means of an artificial neural network (2) as the initial value $\mathbf{x}_0$, **characterized in that** the initial state $\hat{x}$ ascertained by means of the artificial neural network (2) is used as the initial value $\mathbf{x}_0$ if its target function value $J(\hat{x})$ is greater than or equal to a threshold value $\mathbf{J_c}$.

**Revendications**

1. Procédé de détermination d'un état $x$ (42) d'un réseau électrique, dans lequel on constitue l'état $x$ (42) du réseau électrique en déterminant des tensions et/ou en déterminant des angles en un ou en plusieurs nœuds du réseau électrique, dans lequel la détermination de l'état $x$ (42) s'effectue par une unité informatique, au moyen de laquelle sur la base de plusieurs valeurs $z$ (1) de l'état $x$ (42) du réseau électrique associées au réseau électrique, on calcule à partir d'une valeur $x_0$ de début un procédé (4) numérique itératif et on minimise une fonction $J(x)$ cible par le procédé (4) numérique itératif, dans lequel on utilise comme valeur $x_0$ de début un état $\hat{x}$ de début déterminé à partir des valeurs $z$ (1) de mesure au moyen d'un réseau (2) neuronal artificiel, **caractérisé en ce que** l'on utilise, comme valeur $x_0$ de début, l'état $\hat{x}$ de début déterminé au moyen du réseau (2) neuronal artificiel, si sa valeur $J(\hat{x})$ de fonction cible est supérieure ou égale à une valeur $J_c$ de seuil.

2. Procédé suivant la revendication 1, **caractérisé en ce que** l'on utilise un procédé de Newton comme procédé (4) numérique itératif.

3. Procédé suivant la revendication 1 ou 2, **caractérisé en ce que** les valeurs (1) de mesure constituent un vecteur $z$ de mesure, qui comprend des tensions, des courants, des puissances actives et/ou des puissances réactives détectés et associés aux nœuds du réseau et/ou à des lignes du réseau électrique.

4. Procédé suivant l'une des revendications précédentes, **caractérisé en ce que** l'on forme l'état (42) par un vecteur x d'état, qui comprend les tensions et angles aux nœuds de réseau respectifs du réseau électrique.

5. Procédé suivant l'une des revendications précédentes, **caractérisé en ce que** les valeurs $z$ (1) de mesure sont mises à disposition par un système de commande du réseau électrique.

6. Procédé suivant l'une des revendications précédentes, **caractérisé en ce que** la fonction $J(x)$ cible comprend un écart quadratique pondéré entre les valeurs $z$ (1) de mesure et une fonction $h(x)$ de modèle de mesure, qui dépend de l'état x (42) à déterminer.

7. Procédé suivant l'une des revendications précédentes, **caractérisé en ce que** l'on n'utilise pas comme valeur $x_0$ de début l'état $\hat{x}$ déterminé au moyen du réseau (2) neuronal artificiel, si l'état $\hat{x}$ ne constitue pas un test-chi-carré ayant un seuil de probabilité fixé.

8. Procédé suivant la revendication 7, **caractérisé en ce que** l'on utilise comme seuil de probabilité une valeur entre 95 pour cent et 100 pour cent, en particulier entre 99 pour cent et 100 pour cent.

9. Procédé suivant l'une des revendications précédentes, **caractérisé en ce que** le réseau (2) neuronal artificiel est entraîné et constitué, de manière à déterminer des états du réseau électrique à partir des valeurs de mesure associées au réseau électrique.

10. Procédé suivant l'une des revendications précédentes, **caractérisé en ce que** le réseau (2) neuronal artificiel a été entraîné au moyen d'un ensemble de données d'entraînement, dans lequel l'ensemble de données d'entraînement comprend des valeurs de mesure associées au réseau électrique et des états, appartenant aux valeurs de mesure, du réseau électrique.

11. Procédé suivant la revendication 10, **caractérisé en ce que** l'on forme l'ensemble de données d'entraînement par une ou plusieurs simulations et/ou par des valeurs de mesure historiques et des états historiques, leur appartenant, du réseau électrique.

12. Procédé suivant l'une des revendications précédentes, **caractérisé en ce que** l'on effectue celui-ci, d'une manière répétée suivant des stades fixés dans le temps.

13. Procédé de commande d'un réseau électrique, dans lequel la commande s'effectue sur la base d'un état x (42) déterminé du réseau électrique, qui est constitué par la détermination de tensions et d'angles en un ou en plusieurs nœuds du réseau électrique, **caractérisé en ce que** l'on détermine l'état x (42) au moyen d'un procédé suivant l'une des revendications 1 à 12.

14. Installation de détermination d'un état $x$ (42) d'un réseau électrique, comprenant une unité informatique, dans laquelle l'état $x$ (42) du réseau électrique est constitué par des tensions et des angles en un ou en plusieurs nœuds du réseau électrique et l'unité informatique est constituée de manière à calculer l'état $x$ (42) du réseau électrique sur la base de plusieurs valeurs $z$ (1) de mesure associées au réseau électrique par un procédé (4) numérique alternatif à partir d'une valeur $x_0$ de début, et de manière à minimiser une fonction $J(x)$ cible par le procédé (4) numérique itératif, dans laquelle l'unité informatique est constituée pour utiliser comme valeur $x_0$ de début un état $\hat{x}$ de début déterminé à partir des valeurs $z$ (1) de mesure au moyen d'un réseau (2) neuronal artificiel, caractérisée ce que l'on utilise,

comme valeur $\boldsymbol{x}_0$ de début, l'état $\hat{\boldsymbol{x}}$ de début déterminé au moyen du réseau (2) neuronal artificiel, si sa valeur $J(\hat{x})$ de fonction cible est supérieure ou égale à une valeur $J_c$ de seuil.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012078436 A1

**In der Beschreibung aufgeführte Nicht-Patentliteratur**

- **FIAZ AHMAD**. Distribution system state estimation - A step towards smart grid. *Renewable and Sustainable Energy Reviews*, vol. 81 (2), 2659-2671